# EUROPÄISCHE PATENTANMELDUNG

(11) **EP 1 024 174 A1**
(43) Veröffentlichungstag der Anmeldung: **02.08.2000**
(21) Anmeldenummer: 00200260.8
(22) Anmeldetag: 25.01.2000
(51) Int. Cl.: C08L 99/00

(54) **Biologisch abbaubare Formteile**

(30) Priorität: 27.01.1999 NL 1011143
(71) Anmelder: G.M. Koemans Sr. Beheermaatschappij, 2661 AB Bergschenhoek (NL)
(72) Erfinder: Jongboom, Remigius Oene Jules, 6671 AE Zetten (NL); Stuut, Peter Iwan, 3524 AM Utrecht (NL); Rodenburg, Jan Arie, 2661 AB Bergschenhoek (NL)
(74) Vertreter: Jorritsma, Ruurd

(57) **Zusammenfassung**

Es wird ein Verfahren zur Herstellung von Formteilen auf der Grundlage von biologischem Material beschrieben, wobei man Biertreber, gegebenenfalls in Gegenwart eines Weichmachers wie Glycerol oder Harnstoff und Lecithin einer thermomechanischen Behandlung wie Strangpressen unterzieht und danach formt, zum Beispiel durch Spritzguss. Die Formteile haben gute mechanische Eigenschaften und eine gute biologische Abbaubarkeit.

## Beschreibung

Die Erfindung betrifft biologisch abbaubare Formteile aus biologischem Restmaterial aus der Bierbrauerei.

Für zahlreiche Anwendungen, wie Profile, Rohre, Rinnen, Töpfe und andere Behältnisse gibt es einen Bedarf nach biologisch abbaubaren Formteilen, die aus preiswerten Materialien hergestellt werden können. Für solche Anwendungen ist vorgeschlagen worden, Stärkemehl, gegebenenfalls vermischt mit anderen Polymeren und Füllstoffen, zu bearbeiten und zum Beispiel durch Strangpressen zu formen. Beispiele dafür sind in WO 92/02559 und EP-A-707034 beschrieben. Solche Produkte haben allerdings eine Reihe von Nachteilen, worunter hohe Produktionskosten und hohe Verarbeitungstemperaturen.
Erstaunlicherweise ist nun festgestellt worden, dass man den Treber (das heißt die unlöslichen Rückstände des verarbeiteten Malzes) in einem relativ einfachen und kostengünstigen Verfahren zu festen, wasserbeständigen und trotzdem gut abbaubaren Formteilen verarbeiten kann. Das Verfahren nach der Erfindung beinhaltet folglich die Verarbeitung von Treber oder ähnlichem Material durch Anwendung thermomechanischer Behandlung und Formgestaltung. Treber besteht zu etwa 40 - 50 % aus Fasern (meistens Zellstoff und Hemi-Zellstoff) und zu etwa 20 % aus Eiweiß. Es wird angenommen, dass die Kombination von Fasern und Eiweiß und anderen Komponenten wie Sacchariden im Treber für die günstigen mechanischen Eigenschaften der Formteile verantwortlich sind, zum Beispiel im Vergleich zu den Eigenschaften von auf Pulp basierendem Material, und für die bessere Wasserbeständigkeit, zum Beispiel im Vergleich zu auf Stärke basierendem Material.

Als Ausgangsmaterial verwendet man Biertreber, das heißt das zum Großteil unlösliche Restmaterial, dass bei der Bierbrauerei anfällt. In der Bierbrauerei wird Gerste (zweireihige Sommergerste) einer Transformation unterzogen. Dies geschieht in der Mälzerei, wo die Gerste geweicht wird und nach zwei Tagen zum Keimen auf den Keimboden gebracht wird, wobei sich ein Wurzel- und ein Blattkeim entwickeln. Gleichzeitig werden Enzyme gebildet, die später die Stärke - der wichtigste Reservestoff von Gerste - in Maltosezucker umwandeln können. Nach 5 Tagen Keimen wird die Gerste mit warmer Luft getrocknet (Darren). Im Brausaal wird der gemahlene Malz in dem Maischbottich mit dem Bauwasser vermischt. Die Zusammensetzung dieses Wassers ist für die Qualität und den Geschmack des Bieres entscheidend.
Das Gemisch aus Wasser und Malz - die Maische - wird in einer Reihe von Schritten auf unterschiedliche Temperaturen gebracht. Die Enzyme, die während des Keimens gebildet wurden, bauen die Stärke im Malz weiter ab zu gärfähigem Zucker, ein Verfahren, das in etwa 4 Stunden dauert. Durch Filtrierung werden die festen Bestandteile (der Trub, der als Viehfutter verkauft wird) vom flüssigen Zuckerextrakt, der Würze, getrennt, die anderthalb Stunden im Kochkessel gekocht wird. Der Hopfen, der für den bitteren Geschmack und das angenehme Hopfenaroma des Bieres Sorge trägt, wird während des Kochens beigemischt. Das Kochen bewirkt einen sterilen Extrakt, der nach dem Abkühlen in den Gärbottich verpumpt wird.

Neben dem Restmaterial der Brauerei kann man auch anderes biologisch abbaubares Material anwenden wie Stärke, Zellstoff(derivate), Guargummi, Johannesbrotmehl, Dragant, Pektin, arabisches Gummi oder andere Gummiarten, Naturkautschuk, Polyester wie Polycaprolacton und Polymilchsäure, Eiweiß wie Kleber und Kasein. Die Mitanwendung von Eiweißhydrolysaten und biologisch abbaubaren Polyestern kann vorteilhaft sein, weil damit die Formstabilität des letztendlichen Formteils gesteigert werden kann. Beispiel von Eiweiß und Eiweißhydrolysaten sind Keratinhydrolysat, Kleber und Zein. Beispiele wasserfester abbaubarer Polyester sind Polymilchsäure und Polycaprolacton. Auch kann Stärke oder Schalenmaterial (zum Beispiel Kartoffelschalenbrei) als Bindemittel verarbeitet werden. Die Menge des hinzugefügten Materials wie Eiweiß, Stärke oder Polyester kann variieren zwischen einigen Prozentpunkten bis zu beispielsweise 60% gegenüber dem trocknen Restmaterial. Vor allem bei größeren Mengen (zum Beispiel 20 - 60 %) kann das beigemischte Material als kontinuierliche Phase dienen. Das beigegebene Material kann vor, während oder nach der thermischen Behandlung und vor der Formbehandlung beigegeben werden. Wenn das Material nach der thermomechanischen Behandlung beigegeben wird, muss daraufhin ein Mischvorgang, zum Beispiel ein Knetvorgang, angewandt werden. Ein beigemischtes Eiweiß (-hydrolysat) oder Polysaccharid kann während der thermomechanischen Behandlung erforderlichenfalls teilweise verknüpft werden, so dass ein polymeres Netzwerk entsteht. Für die Verknüpfung können die üblichen Crosslinker wie Dialdehyde, Diamine, Epichlorhydrin usw. in Mengen von zum Beispiel 0,1 - 10 Gew.% gegenüber dem verknüpfbaren Material angewandt werden.

Der Treber kann vor der thermomechanischen Behandlung zerkleinert werden. Dieses Zerkleinern kann in jeder üblichen Weise erfolgen, zum Beispiel durch Mahlen, Sieben, Pürieren, Schaben. Dem Treber kann daraufhin ein Weichmacher wie Polyol (Glykol, Diethylenglykol oder ein anderes Alkylenglykol oder Polyalkylenglykol, Glyzerol, Glyzerol-Monoester usw.), Zitronensäure-Ester oder Harnstoff beigegeben werden, aber auch Wasser allein kann ausreichen. Die Wassermenge ist vorzugsweise 3 - 35 Gew.% gegenüber der Gesamtheit des abbaubaren Polymers. Die Menge des zusätzlichen Weichmachers wie Glyzerol beträgt vorzugsweise 0 - 25 Gew. %. Weiter kann ein Emulgator oder Fließverbesserer wie Lecithin oder ein Monoglyzerid (zum Beispiel 0,5 - 5 Gew.%), Ein Lösungsmittel wie ein Öl (zum Beispiel Rizinusöl), Fettsäure oder Metallsalz davon (zum Beispiel Kalziumstearat) beigegeben werden. Zur Erhöhung der Festigkeit und/oder des Volumens der Formteile kann man ein Füllmaterial, wie eine natürliche Faser, zum Beispiel Flachs, Stroh, Elefantengras, Baumwolle, Jute oder Papier hinzufügen, zum Beispiel in einer Menge von 5-50 Gew. % gegenüber dem Treber. Auch anorganische Füllstoffe wie Kalk oder Kreide können beigegeben werden, zum Beispiel in einem Mengenverhältnis von 0,5 - 5 Gew.% gegenüber der Menge Biertreber. Die Beigabe von Kalk kann die Wasserbeständigkeit des Endprodukts erforderlichenfalls weiter vergrößern. Andere mögliche Zusätze sind Farbstoffe, Konservierungsmittel und insbesondere Schwell- oder Blasemittel wie Natriumbikarbonat und keimbildende Stoffe wie Talk.

Das Gemisch aus Treber und Zusätzen wird daraufhin thermomechanisch behandelt. Dabei kann es mit an sich bekannten Körnungs- beziehungsweise Pelletisierungsverfahren zum Beispiel durch Strangpressen in einem Doppelschneckenextruder bei erhöhter Temperatur (80 - 180 °C insbesondere 120 - 150 °C) in Korn-/Pellet-Form gebracht werden. Die Korngröße wird durch die Geschwindigkeit der Granulierung und der etwaigen Mahlschritte nach der Granulierung bestimmt. In Abhängigkeit vom Vorhandensein anderer Weichmacher kann der Wassergehalt während des Strangpressens von 3 bis 35 Gew.% variieren.

Das erhaltene Produkt kann auf einen für das Verfahren optimalen Feuchtigkeitsgehalt konditioniert werden. je nach dem Gehalt an sonstigen Weichmachern variiert der Feuchtigkeitsgehalt nach dem Konditionieren zwischen 5 und 35%. Danach kann das konditionierte Produkt in eine Form gebracht werden, die die Gestalt des letztendlich zu erzeugenden Formteils hat. Wenn das konditionierte Produkt die Form von Körnern hat, so kann eine menge Haftmittel (zum Beispiel ein Gemisch aus nativer Stärke und Glyzerol) beigegeben werden, um die Haftung zwischen den Kömern während des Formverfahrens zu fördern.

Das Formen kann durch Gießen, Spritzgießen, Pressen und ähnliche Techniken geschehen. Insbesondere das Spritzgießen ergibt in einfacher Weise günstige Formteile. Der Wassergehalt des Materials vor dem Spritzgießen ist vorzugsweise 5- 25 Gew.% Spritzgießen kann bei einer Temperatur von zum Beispiel 60 - 180°C ausgeführt werden, insbesondere bei 130 - 140 °C. Wenn voluminöse Produkte gewünscht werden, kann das Formen durch Aufschäumen mittels eines Blasemittels erfolgen, wie mit Kohlendioxid, niederen Alkanen oder, insbesondere, Wasser. Eine geeignete Weise des Aufschäumens ist zum Beispiel Aufschäumen unter Anwendung elektromagnetischer Strahlung, insbesondere im Mikrowellenbereich (Frequenz zwischen 20 MHz und 10 GHz und insbesondere zwischen 50 MHz und 5 GHz). Dabei wird die Strahlungsenergieaufnahme durch in dem Produkt vorhandenes Wasser, Glyzerol oder einen anderen dipolaren Stoff genutzt, wobei dieser Stoff sich in sehr kurzer Zeit aufwärmt und in die Dampfphase über geht. Dabei spielen sich zwei Prozesse gleichzeitig ab: Erstens das Aufschäumen als Folge des Verdampfens des Wassers oder des anderen einen Dipol enthaltenen Stoffs. Der Vorteil dabei ist, dass keine thermische Energie von außen herangeführt zu werden braucht. Zweitens wird das lose Material gleichzeitig zu einem dreidimensionalen Schaumformteil "zusammengeschweißt". Dafür ist es von Bedeutung, dass die Außenseite der Körner schmelzfähig ist, wofür ein wenigstens teilweise thermoplastisches Verhalten des bearbeiteten Trebers erforderlich ist. Ein solches Aufschäumverfahren muss schnell, das heißt innerhalb weniger Sekunden erfolgen. Dies kann durch Einsatz einer Hochleistungsmikrowellenquelle (zum Beispiel bis zu 50 kW) oder durch Einsatz einer Kombination von Mikrowellengenerator und Form bewirkt werden, in der der Druck schnell variiert werden kann. Nachdem das Material auf diese Weise in die gewünschte Form gebracht worden ist, wird die Form geöffnet und das Produkt herausgenommen.

Die mit dem Verfahren nach der Erfindung erhaltenen Produkte können jede gewünschte Form aufweisen. Eine bedeutende Anwendung ist die der kontinuierlichen Formteile wie Profile, Hülsen, Rinnen, Platten und dergleichen. Solche Formteile können porös sein, zum Beispiel bei Anwendung als Umhüllung für einen in Wasserumgebung anzuschwellenden Gegenstand. Auch diskontinuierliche Gegenstände wie Töpfe, Kartons und dergleichen können hergestellt werden. Ein Beispiel dafür ist ein Verpackungsmittel, zum Beispiel für empfindliche Geräte, Glas, Postsendungen und dergleichen. Auch kann das Produkt die Form von Kügelchen, Scheibchen usw. haben, die als Füllmittel in Verpackungen eingesetzt werden können. Vorteile dieses Materials sind das von Natur aus antistatische Verhalten, der Umstand, dass wasserlösliche Varianten möglich sind und die biologische Abbaubarkeit und die Kompostierfähigkeit. Im Falle von aufschäumendem Material ist auch die geringe Dichte für viele Anwendungen ein Vorteil.

Obwohl die Formteile nach der Erfindung eine gute Wasserbeständigkeit haben, ist es möglich, an dem erhaltenen Formteile eine Schutzschicht anzubringen. Eine solche Schicht kann zum Beispiel eine Wachsschicht oder eine Polymerschicht sein. Brauchbare Polymere dafür sind thermoplastische oder thermohärtende Polymere, abhängig von der Verarbeitung und der Anwendung, wie ein Naturkautschuk oder ein Polyester, vorzugsweise ein abbaufähiger Polyester wie eine Polymilchsäure oder Poly-ε―Caprolacton.

### Beispiele

### 1 Experimentell

### 1.1.Strangpressen

Die Strangpress-Experimente, um aus Biertreber thermoplastisches Material herzustellen, wurden mit einem Werner & Pfleiderer ZSK 25 Extruder ausgeführt. Dies ist ein selbstreinigender, mitdrehender Doppelschneckenextruder. Vorgemahlener Biertreber (Wassergehalt 10 %) wurde mit Dampfschalenbrei (Wassergehalt 85%), Kartoffelflakes (Wassergehalt 13 %) und Fließverbesserer (Lecithin) in einem Bear Varimixer vorgemischt und mit einem K-Tron K2M T85 volumetrischem Feeder dem Extruder zudosiert. Mittels einer Plungerpumpe wurde dem Extruder zusätzliches Wasser beigegeben. Die Schraubgeschwindigkeit des Extruders belief sich bei den Experimenten auf 100 U/m. Das Temperaturprofil über den Extruder war 80-90-130-130-130-110-90 °C.

### 1.2. Pressen

Die stranggepressten Biertrebermaterialien wurden auf 30% Feuchtigkeit gebracht, bevor sie gepresst wurden. Für die Pressexperimente wurde eine 75 Tonnen-Presse von Pasadena Hydrolics Inc. mit 2 unabhängig in Temperatur einstellbaren Pressplatten und einer einstellbaren Presszeit eingesetzt. Zum Pressen der Mischung wurde pro Platte 90 - 100 g Material abgewogen. Die Mischung wurde in einer 4 mm Form ( 1 x b = 150 mm x 100 mm) eingesetzt und einige Minuten drucklos auf die eingestellte Temperatur vorgeheizt. Die Presstemperatur wurde von 80 bis 120 °C variiert. Die Mischungen wurden mit 20 Tonnen Pressdruck und 8 Minuten Pressdauer gepresst. Das gepresste Plattenmaterial wurde nach dem Pressen 48 Stunden in einem Ofen bei 90°C getrocknet. Nach dem Trocknen wurden die Platten bei 60 % relativer Luftfeuchtigkeit und 20°C verwahrt.

### 1.3. Spritzgießen

Das Spritzgießen der einzelnen Versuchsstäbe wurde mit einer Ergotech NC IV Spritzgussmaschine durchgeführt. Die Granulatarten wurden vor dem Spritzgießen auf 60 % relative Luftfeuchtigkeit konditioniert und bei einer Temperatur von 120 °C verarbeitet. Der Spritzgussdruck lag zwischen 400 und 900 bar, die Zykluszeit lag zwischen 27 und 48 Sekunden, je nach der Granulatart. Die Formtemperatur wurde auf 20 °C gehalten.

### 1.4.Mechanische Eigenschaften

Die mechanischen Eigenschaften der Versuchsplatten und -stäbe wurden mittels Biegeversuche auf einer Zwick 1445 Zugfestigkeitsprüfmaschine gemäß NEN EN 130 Norm durchgeführt. Die Stäbe waren vorher 5 Tage lang auf 30 und 60 % Luftfeuchtigkeit konditioniert. Pro Versuchsplatte und Versuchsstab sind 5 Messungen durchgeführt worden.

### 2 Eigenschaften

Die Zusammensetzung und die Eigenschaften der einzelnen verarbeiteten Biertrebererzeugnisse sind in der Tabelle 1 beziehungsweise der Tabelle 2 angegeben.

**Tabelle 1:**

| Zusammensetzung der Biertrebermaterialien für Strangpressen | | | | |
|---|---|---|---|---|
| Batch | Schalenbrei¹ % | Flakes² % | Wasser³ % | Lecithin⁴ |
| 1 | 44 | 12 | 0 | 0 |
| 2 | 46 | 20 | 0 | 0 |
| 3 | 48 | 28 | 10 | 0 |
| 4 | 50 | 37 | 11 | 0 |
| 5 | 87 | 24 | 0 | 0 |
| 6 | 0 | 19 | 56 | 3 |
| 7 | 0 | 17 | 43 | 3 |
| 8 | 0 | 16 | 32 | 3 |
| 1- Menge (% w/w gegenüber trocknem Biertrebergehalt) Dampfschalenbrei | | | | |
| 2- Menge (% w/w gegenüber trocknem Biertrebergehalt) Kartoffelflakes | | | | |
| 3- Menge (% w/w gegenüber trocknem Biertrebergehalt) beigegebenes Wasser | | | | |
| 4- Menge (% w/w gegenüber trocknem Biertrebergehalt) Fließverbesserer (Lecithin) | | | | |

**Tabelle 2:**

| Mechanische Eigenschaften der Biertrebererzeugnisse | | | | | | | |
|---|---|---|---|---|---|---|---|
| Batch | RH (%) | E-Modul (N/mm²) | | Max. Belastung (N/mm²) | | 1 max. Belastung (%) | |
| | | Spritzguss | Gepresst | Spritzguss | Gepresst | Spritzguss | Gepresst |
| 1 | 60 | 407 | 1598 | 2.5 | 12.3 | 0.7 | 0.7 |
| 2 | 60 | 443 | 2193 | 3.2 | 14.5 | 0.9 | 0.7 |
| 3 | 60 | 563 | 2533 | 3.6 | 16.1 | 0.8 | 0.7 |
| 4 | 60 | 563 | 2752 | 5.3 | 15.7 | 0.6 | 0.6 |
| 5 | 60 | 870 | 2200 | 4.8 | 13.7 | 0.6 | 0.6 |
| 6 | 60 | 767 | 1875 | 4.7 | 10.9 | 0.7 | 0.6 |
| 7 | 60 | 548 | 2112 | 3.8 | 11.6 | 0.9 | 0.6 |
| 8 | 60 | 703 | 1983 | 4.8 | 12.0 | 0.9 | 0.6 |
| 6 | 30 | 691 | | 4.4 | | 0.7 | |
| 7 | 30 | 590 | | 3.9 | | 0.8 | |
| 8 | 30 | 658 | | 5.5 | | 1 | |

## Patentansprüche

1. Verfahren zur Fertigung von Formteilen auf der Grundlage von biologisch abbaubarem Material, dadurch gekennzeichnet, dass man Biertreber einer thermostatischen Behandlung unterzieht und danach formt.

2. Verfahren nach Anspruch 1, wobei man die thermostatische Behandlung in Gegenwart eines Weichmachers, wie ein Polyol oder ein Harnstoff, ausführt.

3. Verfahren nach Anspruch 1 oder 2, wobei die thermomechanische Behandlung das Strangpressen umfasst.

4. Verfahren nach einem der Ansprüche 1-3, wobei man das Formen in Gegenwart eines Blasemittels ausführt, wie Wasserdampf oder Kohlendioxid.

5. Verfahren nach einem der Ansprüche 1- 4, wobei man den Biertreber vor, während oder nach der thermomechanischen Behandlung mit 5-60 Gew.% eines Bindemittels wie eines Polysaccharids oder eines Schalenmaterials und/oder eines Eiweißes oder eines Eiweißhydrolysats und/oder eines biologisch abbaubaren Polyesters mischt.

6. Verfahren nach Anspruch 5, wobei man Polysaccharid, Eiweiß oder Eiweißhydrolysat während der thermomechanischen Behandlung verknüpft.

7. Verfahren nach einem der Ansprüche 1-6, wobei man das Polymer durch Strangpressen in Form von Körnern /Pellets bringt.

8. Verfahren nach Anspruch 7, wobei die Körner / Pellets kurz vor dem Formen 5-35 Gew.% Wasser enthalten.

9. Verfahren nach einem der Ansprüche 1-8, wobei das Formen durch Spritzguss oder Pressen ausgeführt wird.

10. Formteil aus thermoplastisch behandelten Biertreber, zu erhalten mit dem Verfahren nach einem der vorigen Ansprüche.
